# EUROPÄISCHE PATENTSCHRIFT

(11) **EP 4 788 939 B1**
(45) Veröffentlichungstag und Bekanntmachung des Hinweises auf die Patenterteilung: **09.12.2026**
(21) Anmeldenummer: 25828152.6
(22) Anmeldetag: 08.12.2025
(51) Int. Cl.: F16C 17/00, F16C 33/12, F16C 33/20

(54) **GLEITLAGERVERBUNDWERKSTOFF MIT EPOXIDHARZ-KLEBSTOFF**
SLIDING BEARING COMPOSITE MATERIAL WITH EPOXY RESIN ADHESIVE
MATÉRIAU COMPOSITE DE PALIER LISSE AVEC ADHÉSIF À RÉSINE ÉPOXY

(30) Priorität: 18.12.2024 DE 102024138768
(43) Veröffentlichungstag der Anmeldung: 12.08.2026
(73) Patentinhaber: KS Gleitlager GmbH, 68789 St. Leon-Rot (DE)
(72) Erfinder: REINICKE, Rolf, 76669 Bad Schönborn (DE); BICKLE, Rüdiger, 68799 Reilingen (DE); DANZ, Michael, 76344 Eggenstein-Leopoldshafen (DE); KÜNTZLER, Boris, 76872 Steinweiler (DE); WIELAND, Birgit, 68799 Reilingen (DE)
(74) Vertreter: DREISS Patentanwälte PartG mbB
(86) Internationale Anmeldenummer: PCT/EP2025/085919
(87) Internationale Veröffentlichungsnummer: WO 2026/131243

(56) Entgegenhaltungen:
- EP-A1- 2 136 091
- CN-A- 108 350 941
- CN-A- 113 853 485
- CN-A- 116 867 831

## Beschreibung

Die Erfindung betrifft einen Gleitlagerverbundwerkstoff mit einer Stützschicht und einer darauf aufgebrachten Gleitschicht aus einem Gleitmaterial auf Polymerbasis.

Derartige Gleitlagerverbundwerkstoffe sind im Stand der Technik in vielfältiger Weise bekannt. Insbesondere sind Gleitlagerverbundwerkstoffe bekannt, bei denen auf der Stützschicht eine poröse Bronze-Schicht als Anbindungsschicht aufgebracht ist, in welche das polymere Gleitmaterial imprägniert ist. Ein solcher Gleitlagerverbundwerkstoff ist beispielsweise in der DE 10 2006 048 311 A1 beschrieben.

Es ist auch bekannt, die Gleitschicht mit der Stützschicht zu verkleben. Beispielsweise ist aus der EP 2 139 675 B1 ein Gleitlager, umfassend einen Metallträger und eine Gleitschicht bekannt, wobei der Metallträger und die Gleitschicht über eine Zwischenschicht aus einem funktionalisierten thermoplastischen Fluorpolymer gefügt sind. Solche Haftschichten auf Fluorpolymer-Basis sind jedoch aus Umweltschutzgründen zunehmend unerwünscht.

Aus der DE 10 2008 049 747 A1 ist zudem ein Gleitlager-Verbundmaterial umfassend eine ein Gleitmaterial enthaltende Gleitschicht, eine formstabile Trägerschicht und eine elastische Schicht bekannt. Die Gleitschicht und die Trägerschicht sind mittels einer Klebeschicht verbunden, welche als Klebstoff mindestens Fluorpolymer, ausgehärtete Klebstoffe, Polyimidkleber und/oder Heißkleber niedriger Temperatur oder geeignete Thermoplaste und/oder Mischungen daraus enthält.

Aus der DE 10 2018 133 640 A1 ist zudem ein Lagerbauteil bekannt, umfassend ein Substrat, eine Gleitschicht, die über dem Substrat liegt, und ein Metallgewebe, das Filamente umfasst, die in die Gleitschicht eingebettet sind. Das Lagerbauteil kann eine Klebeschicht zwischen dem Metallgewebe und dem Gleitschicht-Substrat beinhalten.

Aus der DE 24 21 224 A1 ist zudem ein Trockengleitlager bekannt bestehend aus einem Stahlrücken, einer Gleitschicht aus Polyamid-11 und einer zwischen dem Stahlrücken und der Gleitschicht vorgesehenen Schicht aus einem Epoxidharz. Zur Herstellung des Trockengleitlagers wird der Stahlrücken zunächst mit einem Epoxidharzpulver bestreut, anschließend auf dieses Pulver eine Schicht eines Polyamid-11-Pulvers aufgebracht und die beiden Schichten in einem Erhitzungsvorgang mit gestaffelten Temperaturen zum Schmelzen gebracht.

Ein weiterer gattungsgemäßer Gleitlagerverbundwerkstoff geht aus CN 113 853 485 A hervor.

Trotz der Vielzahl an bekannten Gleitlagerverbundwerkstoffen mit polymerem Gleitmaterial, besteht nach wie vor ein Bedarf an einem Gleitlagerverbundwerkstoff, der kostengünstig ist und zudem robust in der Anwendung ist.

Die Erfindung beschäftigt sich mit der Aufgabe, einen Gleitlagerverbundwerkstoff bereitzustellen, welcher umweltfreundlich ist, gut weiterverarbeitbar ist, und zudem robust in der Anwendung ist.

Diese Aufgabe wird erfindungsgemäß durch einen Gleitlagerverbundwerkstoff mit den Merkmalen des Anspruchs 1, ein Gleitlagerelement mit den Merkmalen des Anspruchs 15 sowie eine Verwendung eines Epoxidharz-Klebstoffs gemäß Anspruch 16 gelöst.

Gemäß einem ersten Aspekt wird ein Gleitlagerverbundwerkstoff vorgeschlagen, umfassend eine Stützschicht, und eine Gleitschicht umfassend ein, insbesondere aus einem, Gleitmaterial, wobei die Gleitschicht mittels eines, insbesondere unmittelbar auf die Stützschicht aufgebrachten, Epoxidharz-Klebstoffs (auch als Epoxyklebstoff oder Epoxidklebstoff bezeichnet) mit der Stützschicht gefügt, insbesondere fest verbunden, ist. Der Epoxidharz-Klebstoff ist derart ausgebildet, dass er eine Bruchdehnung von über 10% und weniger als 60% und ein Elastizitätsmodul (auch als E-Modul oder Zugmodul bezeichnet) von weniger als 2000 MPa und mehr als 200 MPa aufweist.

Ein solcher Gleitlagerverbundwerkstoff zeichnet sich durch eine gute Weiterverarbeitbarkeit aus und weist zudem optimierte mechanische und thermische Eigenschaften auf. Insbesondere hat sich im Rahmen der Erfindung herausgestellt, dass durch die Verwendung eines zuvor beschriebenen Epoxidharz-Klebstoffs mit für Epoxidharz-Klebstoffe ungewöhnlich hoher Bruchdehnung und geringem E-Modul eine verbesserte Umformbarkeit des Gleitlagerverbundwerkstoffs erzielt werden kann, was bspw. eine Herstellung von Gleitlagerbuchsen, insbesondere Gleitlagerbundbuchsen, oder Gleitlagerschalen verbessert. Gleichzeitig konnten durch die Verwendung eines Epoxidharz-Klebstoffs mit den erfindungsgemäßen Eigenschaften verbesserte Dämpfungseigenschaften des Gleitlagerverbundwerkstoffs erzielt werden. Durch den vorgeschlagenen Verbund wird zudem ein Spannungsausgleich zwischen Stützschicht und Gleitschicht bei temperaturinduzierten Spannungen begünstigt, was einen robusten Einsatz des Gleitlagerverbundwerkstoffs auch bei wechselnder Temperaturbelastung begünstigt. Darüber hinaus hat sich herausgestellt, dass der erfindungsgemäße Gleitlagerverbundwerkstoff besonders widerstandfähig gegenüber scherenden mechanischen Verformungen ist, insbesondere auch bei Gleitlagematerialien mit Füllstoffen. Dies wird insbesondere darauf zurückgeführt, dass durch die vergleichsweise hohe Bruchdehnung des Epoxidharz-Klebstoffs dieser beim Schälvorgang bis zu einem hohen Grad mitverformt werden kann und somit die Kraft beim Schälvorgang auf eine größere Fläche verteilt ist. Im Vergleich zu Klebeschichten auf Polyethylen-Basis weist der erfindungsgemäße Gleitlagerverbundwerkstoff mit Epoxidharz-Klebstoff zudem eine höhere Temperaturbeständigkeit auf.

Die Bruchdehnung (gelegentlich auch als Reißdehnung bezeichnet) und das Elastizitätsmodul (E-Modul) sind insbesondere in einem Zugversuch nach DIN EN ISO 527 (mit einer Zuggeschwindigkeit von 2 mm/min) bestimmt.

Als besonders vorteilhaft hat es sich herausgestellt, wenn der Epoxidharz-Klebstoff eine Bruchdehnung von über 15% aufweist. Weiter erweist es sich als vorteilhaft, wenn der Epoxidharz-Klebstoff eine Bruchdehnung von weniger als 50% aufweist. Insbesondere kann der Epoxidharz-Klebstoff ein Epoxidharz-Klebstoff mit einer Bruchdehnung zwischen 10% und 60%, vorzugsweise zwischen 15 und 50% sein.

Weiter erweist es sich als vorteilhaft, wenn der Epoxidharz-Klebstoff ein Elastizitätsmodul von weniger als 1500 MPa, insbesondere von weniger als 1000 MPa, aufweist. Weiter erweist es sich als vorteilhaft, wenn der Epoxidharz-Klebstoff ein Elastizitätsmodul von mehr als 400 MPa, vorzugsweise mehr als 500 MPa aufweist. Insbesondere kann der Epoxidharz-Klebstoff ein Epoxidharz-Klebstoff mit einem ein Elastizitätsmodul zwischen 200 MPa und 2000 MPa, vorzugsweise zwischen 400 und 1500 MPa, weiter vorzugsweise zwischen 500 MPa und 1000 MPa, sein.

Der Epoxidharz-Klebstoff kann punktuell oder raupenförmig zwischen Gleitschicht und Stützschicht aufgetragen sein. Vorzugsweise ist der Epoxidharz-Klebstoff jedoch flächig aufgetragen. Insofern kann der Gleitlagerverbundwerkstoff eine zwischen Gleitschicht und Stützschicht angeordnete Fügeschicht, insbesondere Klebeschicht, aufweisen, welche einen Epoxidharz-Klebstoff mit Bruchdehnung von über 10% und einem Elastizitätsmodul von weniger als 2000 MPa aufweist.

Der Epoxidharz-Klebstoff ist insbesondere ein ausgehärteter Epoxidharz-Klebstoff. Bei der vorstehend beschriebenen Bruchdehnung und dem vorstehend beschriebenen Elastizitätsmodul handelt es sind insofern um Eigenschaften des Epoxidharz-Klebstoffes im ausgehärteten Zustand.

Vorzugsweise ist der Epoxidharz-Klebstoff ein wärmeaushärtbarer, insbesondere wärmeausgehärteter, Epoxidharz-Klebstoff. Dies hat als vorteilhaft für eine einfache Herstellung des Gleitlagerverbundwerkstoffes und eine geringe Einwirkung auf das Gleitmaterial herausgestellt.

Der Epoxidharz-Klebstoff kann ein Zwei-Komponenten-Klebstoff (2K-Klebstoff) sein. Vorzugsweise ist der Epoxidharz-Klebstoff aber ein Ein-Komponenten-Klebstoff (1K-Klebstoff). Auf diese Weise ist eine Applikation des Epoxidharz-Klebstoffes vereinfacht.

Der Epoxidharz-Klebstoff umfasst insbesondere ein Epoxidharz und einen Härter. Als vorteilhaft hat es sich herausgestellt, wenn - bezogen auf ein Gesamtgewicht des Epoxidharz-Klebstoffs - ein Anteil des Epoxidharzes an dem Epoxidharz-Klebstoff 15-50 Gew.-% beträgt.

Das Epoxidharz kann beispielsweise ausgewählt sein aus der Gruppe umfassend Bisphenol A, Bisphenol-F, Semisolid-Epoxidharze, Epoxid-Novolake, insbesondere Phenol- oder Kresol-Epoxid-Novolake, und Diglycidylether, insbesondere von Bisphenol-A (DGEBA), von Bisphenol-F sowie von Bisphenol-A/F. Der Härter kann beispielsweise ausgewählt sein aus der Gruppe bestehend aus Dicyandiamid, Guanidine, Anhydride von mehrwertigen Carbonsäuren, Dihydrazide und Aminoguanidine, sowie deren Derivaten, wobei Dicyandiamid bevorzugt ist.

Der Epoxidharz-Klebstoff kann weitere Komponenten umfassen, insbesondere ausgewählt aus der Gruppe umfassend Reaktivverdünner, Härter-Beschleuniger, Feuchtigkeitsfänger, Füllstoffe, Modifikatoren, insbesondere Schlagzähmodifikatoren, und Kombinationen davon. Der Härter-Beschleuniger kann beispielsweise ausgewählt sein aus der Gruppe bestehend aus substituierten Harnstoffen, Imidazolen, Imidazolinen und Amin-Komplexen. Die Füllstoffe können beispielsweise ausgewählt sein aus der Gruppe bestehend aus Wollastonit, Calciumcarbonat, Calciumoxid, Farbpigmenten, insbesondere Ruß, und pyrogene Kieselsäuren, insbesondere Calciumcarbonat, Calciumoxid und pyrogene Kieselsäuren.

Vorzugsweise umfasst der Epoxidharz-Klebstoff zumindest einen Schlagzähmodifikator. Es ist grundsätzlich bekannt, dass durch Veränderung eines Anteils des Schlagzähmodifikators am Epoxidharz-Klebstoff die mechanischen Eigenschaften des Epoxidharz-Klebstoffes eingestellt werden können, insbesondere mit erhöhtem Anteil an Schlagzähmodifikator das E-Modul verringert und die Bruchdehnung erhöht werden kann. Als Schlagzähmodifikator kann insbesondere ein endständig blockiertes Polyurethanpolymer verwendet werden.

Die Stützschicht ist vorzugsweise eine metallische Stützschicht. Vorteilhafte Materialien der Stützschicht umfassen Stahl, insbesondere Edelstahl, beschichteter Stahl, insbesondere verzinkter Stahl, Aluminium, Aluminiumlegierung, und Bronze. Bevorzugt ist die Stützschicht aus Stahl oder beschichtetem Stahl, insbesondere aus Edelstahl.

Die Stützschicht kann als Flachmaterial, bspw. in Form eines Bandes bereitgestellt sein. Die Stützschicht kann auch als dreidimensionaler Formkörper bereitgestellt sein. Insofern kann die Stützschicht ein Träger, insbesondere Metallträger, sein.

Vorzugsweise ist die Gleitschicht als Folie aus dem Gleitmaterial (Gleitmaterial-Folie) bereitgestellt. Auf diese Weise ist eine Herstellung vereinfacht. Zudem ermöglicht es eine solche Ausgestaltung die Eigenschaften der Gleitschicht zu optimieren. Die Folie aus dem Gleitmaterial ist dann insbesondere mittels des Epoxidharz-Klebstoffs mit der Stützschicht verbunden.

Bei dem Gleitmaterial handelt es sich insbesondere um ein Gleitmaterial auf Polymerbasis. Insofern kann das Gleitmaterial hauptsächlich aus einem Polymer oder einer Polymermischung bestehen. Das Gleitmaterial kann aus einem Polymer oder einer Polymermischung bestehen.

Das Gleitmaterial kann Füllstoffe aufweisen. Die Polymerbasis kann dann insbesondere eine (Polymer)matrix bilden, in welcher die Füllstoffe dispergiert sind. Insbesondere sind die Füllstoffe zumindest abschnittsweise in die Polymerbasis eingebettet. Die Füllstoffe sind insbesondere derart ausgebildet, dass sie die tribologischen Eigenschaften des Gleitmaterials beeinflussen, insbesondere verbessern. Insbesondere können die Füllstoffe einen Reibwert des Gleitmaterial und/oder einen Verschleiß des Gleitmaterials reduzieren. Insbesondere ist das Gleitmaterial ein Gleitmaterial auf Polymerbasis mit die tribologischen Eigenschaften verbessernden Füllstoffen. Es hat sich insbesondere herausgestellt, dass durch die Verwendung eines Epoxidharz-Klebstoffs mit den erfindungsgemäßen Eigenschaften auch bei gefüllten Gleitmaterialien eine gute Umformbarkeit ohne Rissbildung und verbesserte Schälwiderstände erzielt werden können.

Die Füllstoffe können insbesondere Calciumphosphat und/oder mindestens ein Metallsulfid umfassen. Bei dem mindestens Metallsulfid kann es sich insbesondere um SnS₂ WS₂, MoS₂, Bismutsulfid sowie Kombinationen hiervon handeln. Vorzugsweise umfassen die Füllstoffe SnS₂ und/oder WS₂.

Das Gleitmaterial ist vorzugsweise PFAS-frei, d.h. frei von per- und polyfluourierten Chemikalien. Insbesondere enthält das Gleitmaterial keine Fluorpolymere. Auf diese Weise ist eine besonders umweltfreundliche Herstellung und Entsorgung begünstigt. Insbesondere ist der Gleitlagerverbundwerkstoff PFAS-frei.

Vorzugsweise enthält die Polymerbasis einen thermoplastischen Kunststoff oder besteht daraus. Besonders vorteilhafte Kunststoffe sind ausgewählt aus der Gruppe bestehend aus Polyamid, Polyethylen, PEEK, PPA, PPS, POM und Mischungen daraus. Insofern kann das Gleitmaterial einen Kunststoff ausgewählt aus der Gruppe bestehend aus Polyamid, Polyethylen, PEEK, PPA, PPS, POM und Mischungen daraus enthalten oder daraus bestehen. Vorzugsweise ist das Gleitmaterial ein Gleitmaterial auf Polyamid-Basis oder ein Gleitmaterial auf Polyethylen-Basis, insbesondere UHMW-PE-Basis.

Im Rahmen einer ersten vorteilhaften Realisierungsform kann die Polymerbasis eine Polyamid-Basis sein. Polyamid weist vorteilhafte Reibeigenschaften auf und begünstigt gerade in Kombination mit dem erfindungsgemäßen Epoxidharz-Klebstoff ein gut umformbaren und widerstandsfähigen Gleitlagerverbundwerkstoff.

Der Begriff "Polyamid-Basis" bzw. "Polyamidmatrix" bedeutet nicht zwingend, dass die gesamte Polymerbasis bzw. Polyamidmatrix aus Polyamid (eines Typs oder Mischung aus verschiedenen Polyamiden) bestehen muss. Vorzugsweise besteht die Polyamid-Basis aber zu mindestens 80,0 Gew.-%, weiter insbesondere mindestens 90,0 Gew.-%, weiter insbesondere mindestens 95,0 Gew.-% aus Polyamid (eines Typs oder Mischung aus verschiedenen Polyamiden).

Besonders vorteilhaft ist es, wenn die Polyamid-Basis (zu 100 %) aus Polyamid besteht. Dies schließt nicht aus, dass die Polyamid-Basis unerwünschte Verunreinigungen aufweist, insbesondere bis zu 1,0 Gew.-%, vorzugsweise bis zu 0,5 Gew.-%, weiter vorzugsweise bis zu 0,2 Gew.-%.

Die Polyamid-Basis oder der Polyamid-Anteil der Polyamid-Basis kann aus Polyamid eines Typs bestehen, insbesondere aus Polyamid 46 (nachfolgend PA46) oder Polyamid 6 (nachfolgend PA6), vorzugsweise PA6.

Die Polyamid-Basis oder der Polyamid-Anteil der Polyamid-Basis kann auch aus einer Mischung von verschiedenen Polyamiden bestehen.

Vorteilhafte Polyamid-Typen umfassen PA46, PA6, PA66, PA610, PA612, PA12. Insofern kann die Polyamid-Basis PA46, PA6, PA66, PA610, PA612, PA12 oder Kombinationen hiervon enthalten oder daraus bestehen.

Vorzugsweise umfasst die Polyamid-Basis oder der Polyamid-Anteil der Polyamid-Basis PA6 und wenigstens ein weiteres von PA6 verschiedenes Polyamid, insbesondere PA46 und/oder PA66. Besonders bevorzugt besteht die Polyamid-Basis aus einer Mischung aus PA6 und PA66.

Insbesondere beträgt der Anteil der Polyamid-Basis am Gleitmaterial mindestens 60 Gew.-%, insbesondere mindestens 65 Gew.-%, weiter insbesondere mindestens 70 Gew.-%, weiter insbesondere mindestens 75 Gew.-%, weiter insbesondere mindestens 80 Gew.-%.

Gemäß einer vorteilhaften Weiterbildung der ersten Realisierungsform kann das Gleitmaterial auf Polyamid-Basis Polyethylen mit einer mittleren Molaren Masse von wenigstens 0,5 Millionen g/mol, insbesondere von wenigstens 5,0 Millionen g/mol, als Füllstoff aufweisen.

Vorzugweise beträgt der Anteil an Polyethylen am Gleitmaterial 2 bis 25 Gew.-%, insbesondere 17,5 bis 22,5 Gew.-%, weiter insbesondere 20 Gew.-% (bezogen auf ein Gesamtgewicht des Gleitmaterials).

Eine erstes vorteilhaftes Gleitmaterial gemäß der ersten Realisierungsform umfasst (Angaben jeweils bezogen auf ein Gesamtgewicht des Gleitmaterials):
- 15 bis 25 Gew.-%, insbesondere 17,5 bis 22,5 Gew.-%, vorzugsweise 20 Gew.-%, Polyethylen mit einer mittleren Molaren Masse von wenigstens 0,5 Millionen g/mol als Füllstoff und
- gegebenenfalls bis zu 5 Gew.-% Pigmente;
- Rest Polyamid-Basis, insbesondere Polyamid, vorzugsweise aufweisend oder bestehend aus PA6.

Ein zweites vorteilhaftes Gleitmaterial gemäß der ersten Realisierungsform umfasst (Angaben jeweils bezogen auf ein Gesamtgewicht des Gleitmaterials):
- 2 bis 20 Gew.-%, insbesondere 2 bis 15 Gew.-%, weiter insbesondere 5 bis 15 Gew.-%, weiter insbesondere 5 bis 10 Gew.-%, Polyethylen mit einer mittleren Molaren Masse von wenigstens 0,5 Millionen g/mol als Füllstoff;
- 2 bis 25 Gew.-%, insbesondere 5 bis 25 Gew.-%, weiter insbesondere 10 bis 20 Gew.-%, wenigstens eines weiteren Füllstoffs,
wobei der wenigstens eine weitere Füllstoff ausgewählt ist aus der Gruppe umfassend:
Bariumsulfat (BaSO₄), Calciumphosphat, Metallsulfid, insbesondere SnS₂ und/oder WS₂, Festschmierstoff, vorzugsweise Graphit, und Kombinationen davon.

Bei einem solchen Gleitmaterial beträgt ein Verhältnis der Gewichtsanteile des weiteren Füllstoffs oder der Summe der weiteren Füllstoffe zu Polyethylen vorzugsweise 3:1 bis 1:1, insbesondere 2:1.

Das zweite vorteilhafte Gleitmaterial kann - als weiteren Füllstoff - Calciumphosphat und/oder mindestens ein Metallsulfid, insbesondere eine Mischung aus Calciumphosphat, WS₂ und SnS₂, umfassen. Dabei beträgt der Anteil Calciumphosphat, der Anteil Metallsulfid, oder der Anteil einer Mischung aus Calciumphosphat und Metallsulfid, insbesondere der Mischung aus Calciumphosphat, WS₂ und SnS₂, maximal 15,0 Gew.-%, vorzugsweise maximal 10,0 Gew.-%, weiter vorzugsweise maximal 7,0 Gew.-%, weiter vorzugsweise maximal 5,0 Gew.-%, weiter vorzugweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.- %, weiter vorzugsweise 3,0 - 5,0 Gew.- %, des Gleitmaterials (bezogen auf ein Gesamtgewicht des Gleitmaterials).

Das zweite vorteilhafte Gleitmaterial kann - als weiteren Füllstoff zusätzlich oder alternativ zu dem Calciumphosphat und dem mindestens einen Metallsulfid - außerdem einen Festschmierstoff, insbesondere ZnS, Ruß, oder hexagonales BN, vorzugsweise Graphit enthalten. Der Anteil an Festschmierstoffen am Gleitmaterial beträgt dabei vorzugsweise 5,0 - 15,0 Gew.-%, weiter vorzugsweise 5,0 - 10,0 Gew.-%, des Gleitmaterials.

Alternativ oder zusätzlich kann das zweite vorteilhafte Gleitmaterial außerdem BaSO₄ als weiteren Füllstoff umfassen, insbesondere wobei der Anteil an BaSO₄ 1,0 - 10,0 Gew.-%, vorzugsweise 1,0 - 5,0 Gew.-%, des Gleitmaterials beträgt.

Vorzugsweise beträgt der Anteil der Füllstoffe am zweiten vorteilhaften Gleitmaterial in Summe maximal 40,0 Gew.-%, insbesondere maximal 35,0 Gew.-%, maximal 30,0 Gew.-%, insbesondere maximal 25,0 Gew.-%, weiter insbesondere maximal 20,0 Gew.-%, weiter insbesondere maximal 15,0 Gew.-%.

Ein drittes vorteilhaftes Gleitmaterial gemäß der ersten Realisierungsform umfasst als Füllstoffe (Angaben jeweils bezogen auf ein Gesamtgewicht des Gleitmaterials):
- 8 bis 12 Gew.-%, vorzugsweise 10 Gew.-%, Polyethylen mit einer Molmasse von wenigstens 0,5 Millionen g/mol, insbesondere von wenigstens 1,5 Millionen g/mol, weiter insbesondere von wenigstens 2,0 Millionen g/mol, weiter insbesondere von wenigstens 5,0 Millionen g/mol;
- 8 bis 12 Gew.-%, vorzugsweise 10 Gew.-%, Calciumphosphat oder eine Mischung aus Calciumphosphat und wenigstens einem Metallsulfid, insbesondere SnS₂ und/oder WS₂, und
- 8 bis 12 Gew.-%, vorzugsweise 10 Gew.-%, Graphit.

Bei einem solchen Gleitmaterial hat es sich als besonders vorteilhaft herausgestellt, wenn die Polyamid-Basis aus einer Mischung aus PA46 und wenigstens einem weiteren von PA46 verschiedenen Polyamid, insbesondere PA66 und/oder PA6, besteht. Insbesondere besteht die Polyamid-Basis aus einer Mischung aus PA6, PA66, und PA46, insbesondere mit einem Masseverhältnis PA6:PA66:PA46 von 8:5:1.

Ein viertes vorteilhaftes Gleitmaterial gemäß der ersten Realisierungsform umfasst als Füllstoffe (Angaben jeweils bezogen auf ein Gesamtgewicht des Gleitmaterials):
- 3 bis 7 Gew.-%, insbesondere 5 Gew.-%, Polyethylen mit einer Molmasse von wenigstens 0,5 Millionen g/mol, insbesondere von wenigstens 1,5 Millionen g/mol, weiter insbesondere von wenigstens 2,0 Millionen g/mol, weiter insbesondere von wenigstens 5,0 Millionen g/mol;
- 3 bis 7 Gew.-%, insbesondere 5 Gew.-%, Calciumphosphat oder Mischung aus Calciumphosphat und wenigstens einem Metallsulfid, insbesondere SnS₂ und/oder WS₂, und
- 3 bis 7 Gew.-%, insbesondere 5 Gew.-%, BaSO4.

Bei einem solchen Gleitmaterial hat es sich als besonders vorteilhaft herausgestellt, wenn die Polyamid-Basis aus einer Mischung aus PA46 und wenigstens einem weiteren von PA46 verschiedenen Polyamid, insbesondere PA66 und/oder PA6, besteht. Insbesondere besteht die Polyamid-Basis aus einer Mischung aus PA6, PA66, und PA46, insbesondere mit einem Masseverhältnis PA6:PA66:PA46 von 4:2:11.

Ein fünftes, besonders vorteilhaftes Gleitmaterial gemäß der ersten Realisierungsform umfasst:
- 13 bis 17 Gew.-%, insbesondere 14 bis 16 Gew.-%, weiter insbesondere 14,5 bis 15,5 Gew.-% Polyethylen mit einer Molmasse von wenigstens 0,5 Millionen g/mol als Füllstoff, insbesondere von wenigstens 1,5 Millionen g/mol, weiter insbesondere von wenigstens 2,0 Millionen g/mol, weiter insbesondere von wenigstens 5,0 Millionen g/mol;
- 5 bis 7 Gew.-%, insbesondere 5,5 bis 6,5 Gew.-%, weiter insbesondere 6,25 Gew.-%, BaSO4 als Füllstoff,
- 5 bis 7 Gew.-%, insbesondere 5,5 bis 6,5 Gew.-%, weiter insbesondere 6,25 Gew.-%, Mischung aus Calciumphosphat und wenigstens einem Metallsulfid, insbesondere SnS₂ und/oder WS₂, als Füllstoff;
- gegebenenfalls bis zu 5 Gew.-% Pigmente;
- Rest Polyamid-Basis, insbesondere wobei die Polyamid-Basis ein Gemisch aus PA6 und PA66 aufweist oder daraus besteht, weiter insbesondere wobei in der Polyamid-Basis das Massenverhältnis von PA6:PA66 zwischen 4:1 und 5:1, vorzugsweise von 4,8:1, beträgt. Insbesondere umfasst das Gleitmaterial 60 Gew.-% PA6 und 12,5 Gew.-% PA66. Die Füllstoffe sind insbesondere in der Polyamid-Basis dispergiert.

Gemäß einer zweiten vorteilhaften Realisierungsform kann die die Polymerbasis eine UHMW-PE-Basis sein. Die Polymerbasis kann insofern ultrahochmolekulares Polyethylen (auch als UHMW-PE oder PE-UHMW bezeichnet) umfassen oder daraus bestehen. Insofern kann es sich bei dem Gleitmaterial um ein Gleitmaterial auf UHMW-PE-Basis. Dies bedeutet nicht zwingend, dass die gesamte Polymerbasis aus UHMW-PE bestehen muss. Vorzugsweise umfasst die Polymerbasis aber mindestens 80,0 Gew.-%, insbesondere mindestens 90,0 Gew.-%, weiter insbesondere mindestens 95,0 Gew.-% ultrahochmolekulares Polyethylen. Besonders vorteilhaft ist es, wenn die Polymerbasis (zu 100 %) aus ultrahochmolekularem Polyethylen besteht. Dies schließt nicht aus, dass die Polymerbasis unerwünschte Verunreinigungen aufweist, insbesondere bis zu 1,0 Gew.-%, vorzugsweise bis zu 0,5 Gew.-%, weiter vorzugsweise bis zu 0,2 Gew.-%.

Vorzugsweise weist das ultrahochmolekulare Polyethylen eine Molmasse von wenigstens 5,0 Millionen g/mol auf, insbesondere von wenigstens 6,0 Millionen g/mol, weiter insbesondere von wenigstens 6,2 Millionen g/mol, weiter insbesondere von wenigstens 6,5 Millionen g/mol, weiter insbesondere von wenigstens 7,0 Millionen g/mol auf. Als besonders vorteilhaft erweist es sich, wenn das ultrahochmolekulare Polyethylen eine Molmasse von mehr als 6,0 Millionen g/mol, insbesondere von mehr als 6,2 Millionen g/mol, weiter insbesondere von mehr als 6,5 Millionen g/mol, weiter insbesondere von mehr als 7,0 Millionen g/mol, aufweist. Insbesondere weist das ultrahochmolekulare Polyethylen eine Molmasse von maximal 10,0 Millionen g/mol auf.

Ein Gleitmaterial auf UHMW-PE-Basis hat sich als in der Herstellung vergleichsweise kostengünstig und einfach verarbeitbar herausgestellt (insbesondere gegenüber den bekannten Gleitmaterialien auf PTFE-Basis). Das vorgeschlagene Gleitmaterial auf UHMW-PE-Basis ist zudem insbesondere PFAS-frei (d.h. frei von per- und polyfluourierten Chemikalien), was eine umweltfreundliche Herstellung und Entsorgung begünstigt. Überraschenderweise hat sich herausgestellt, dass durch die Verwendung des Epoxidharz-Klebstoffs mit den erfindungsgemäßen mechanischen Eigenschaften eine zuverlässige Anbindung des UHMW-PEs an die Stützschicht erzielt werden kann.

Als besonders vorteilhaft hat es sich herausgestellt, wenn das Gleitmaterial gemäß der zweiten Realisierungsform außerdem Calciumphosphat und/oder mindestens ein Metallsulfid, insbesondere SnS₂ und/oder WS₂, als Füllstoff umfasst. Das Gleitmaterial kann weitere Stoffe als Füllstoffe umfassen. Das Gleitmaterial kann auch aus der UHMW-PE-Basis und Calciumphosphat und/oder dem mindestens einen Metallsulfid bestehen. Es hat sich herausgestellt, dass durch die vorgeschlagene Kombination aus UHMW-PE und Calciumphosphat und/oder Metallsulfid die Reibungseigenschaften des Gleitmaterials auch bei fortschreitendem Verschleiß weitestgehend konstant bleiben. Ein weiterer Vorteil ergibt sich aus der Anwendbarkeit des Gleitmaterials sowohl im Trockenlauf als auch unter Öl- oder Fettschmierung. Auf diese Weise ist ein Einsatzbereich gegenüber nur geschmiert einsatzfähigen Gleitmaterialien, bspw. basierend auf PVDF und POM, erweitert.

Als besonders vorteilhaft erweist es sich, wenn der Anteil Calciumphosphat, der Anteil Metallsulfid oder der Anteil einer Mischung aus Calciumphosphat und Metallsulfid maximal 15 Gew.-%, vorzugsweise maximal 10,0 Gew.-%, weiter vorzugsweise maximal 7,0 Gew.-%, weiter vorzugsweise maximal 5,0 Gew.-%, des Gleitmaterials beträgt. Insbesondere kann der Anteil Calciumphosphat, der Anteil Metallsulfid oder der Anteil einer Mischung aus Calciumphosphat und Metallsulfid 1,0 - 15,0 Gew.-%, vorzugsweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.-%, weiter vorzugsweise 3,0 - 5,0 Gew.-%, des Gleitmaterials betragen.

Es ist denkbar, dass das Gleitmaterial gemäß der zweiten Realisierungsform Calciumphosphat umfasst, aber kein Metallsulfid. Dann kann der Anteil Calciumphosphat insbesondere 1,0 - 15,0 Gew.-%, vorzugsweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.-%, weiter vorzugsweise 3,0 - 5,0 Gew.-%, des Gleitmaterials betragen. Es ist auch denkbar, dass das Gleitmaterial mindestens ein Metallsulfid umfasst, aber kein Calciumphosphat. Dann kann der Anteil Metallsulfid insbesondere 1 - 15 Gew.-%, vorzugsweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.-%, weiter vorzugsweise 3,0 - 5,0 Gew.-%, des Gleitmaterials betragen.

Vorzugweise umfassen die Füllstoffe eine Mischung aus Calciumphosphat und wenigstens einem Metallsulfid. Als besonders geeignet hat sich eine Mischung aus Calciumphosphat, WS₂ und SnS₂ herausgestellt. Insofern kann das Gleitmaterial eine Mischung aus Calciumphosphat, WS₂ und SnS₂ als Füllstoffe umfassen. Vorzugsweise beträgt ein Anteil dieser Mischung aus Calciumphosphat, WS₂ und SnS₂ maximal 15,0 Gew.-%, vorzugsweise maximal 10,0 Gew.-%, weiter vorzugsweise maximal 7,0 Gew.-%, weiter vorzugsweise maximal 5,0 Gew.-%, weiter vorzugweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.- %, weiter vorzugsweise 4,0 - 6,0 Gew.- %, weiter vorzugsweise 4,5-5,5 Gew.-% des Gleitmaterials. Insbesondere kann es sich bei den Füllstoffen um eine Mischung aus Calciumphosphat, WS₂ und SnS₂ handeln. Insofern kann das Gleitmaterial aus der Polymerbasis und der eine Mischung aus Calciumphosphat, WS₂ und SnS₂ bestehen.

Als bevorzugt (sowohl betreffend das Gleitmaterial gemäß der ersten Realisierungsform als auch das Gleitmaterial gemäß der zweiten Realisierungsform) hat sich eine Mischung aus Calciumphosphat und wenigstens einem Metallsulfid folgender Zusammensetzung erwiesen:
70,0 - 97,0 Gew.-% Calciumphosphat,
2,0 - 20,0 Gew.-% SnS₂,
1,0 - 10,0 Gew.-% WS₂.

Die Summe der Anteile ergibt dabei 100 Gew.-% (die Prozentangaben beziehen sich insofern auf die Summe der Gewichte der drei Komponenten). Derartige Füllstoffzusammensetzungen bieten besonders gute tribologische Eigenschaften, die insbesondere die Verschleißeigenschaften verbessern.

Als besonders bevorzugt (sowohl betreffend das Gleitmaterial gemäß der ersten Realisierungsform als auch das Gleitmaterial gemäß der zweiten Realisierungsform) hat sich eine Mischung aus Calciumphosphat und wenigstens einem Metallsulfid folgender Zusammensetzung herausgestellt:
88,0 Gew.-% Calciumphosphat,
8,5 Gew.-% SnS₂,
3,5 Gew.-% WS₂.

Im Rahmen einer besonders vorteilhaften Ausgestaltung des Gleitmaterials gemäß der zweiten Realisierungsform umfasst das Gleitmaterial (Angaben jeweils bezogen auf ein Gesamtgewicht des Gleitmaterials):
- 4,0-6,0 Gew.-%, vorzugsweise 4,5-5,5 Gew.-%, weiter vorzugsweise 5,0 Gew.-%, einer Mischung aus Calciumphosphat, WS₂ und SnS₂ (vorzugsweise mit der Zusammensetzung 88,0 Gew.-% Calciumphosphat / 8,5 Gew.-% SnS₂ / 3,5 Gew.-% WS₂) als Füllstoff
- Rest ultrahochmolekulares Polyethyhlen.

Bei manchen Ausgestaltungen des Gleitmaterials gemäß der zweiten Realisierungsform können die Füllstoffe außerdem BaSO₄ umfassen. BaSO₄ dient insbesondere als Festschmierstoff. Vorzugweise beträgt der Anteil an BaSO₄ maximal 10,0 Gew.-%, weiter vorzugweise maximal 5,0 Gew.-%, weiter vorzugweise 1,0 - 10,0 Gew.-%, weiter vorzugsweise 1,0 - 5,0 Gew.-%, des Gleitmaterials.

Im Rahmen einer weiteren besonders vorteilhaften Ausgestaltung kann das Gleitmaterial gemäß der zweiten Realisierungsform zu 94,0 Gew.-% aus ultrahochmolekularem Polyethyhlen, zu 3,0 Gew.-% aus einer Mischung aus Calciumphosphat und mindestens einem Metallsulfid (insbesondere zu 3,0 Gew.-% aus einer Mischung aus Calciumphosphat, WS₂ und SnS₂, vorzugweise mit der Zusammensetzung 88,0 Gew.-% Calciumphosphat / 8,5 Gew.-% SnS₂ / 3,5 Gew.-% WS₂) und zu 3,0 Gew.-% aus BaSO₄ bestehen.

Bei manchen Ausgestaltungen des Gleitmaterials gemäß der zweiten Realisierungsform können die Füllstoffe wenigstens einen weiteren anorganischen Füllstoff, insbesondere Bornitrid, umfassen. Als vorteilhaft hat sich ein Anteil des weiteren anorganischen Füllstoffs, oder der weiteren anorganischen Füllstoffe in Summe, von 0,5 - 3,0 Gew.-%, insbesondere 0,5 - 1,5 Gew.-%, des Gleitmaterials erwiesen.

Zusätzlich oder alternativ können die Füllstoffe des Gleitmaterials gemäß der zweiten Realisierungsform einen oder mehrere weitere Funktionsstoffe umfassen. Der wenigstens eine weitere Funktionsstoff kann insbesondere aus der folgenden Gruppe an Funktionsstoffen ausgewählt sein:
- Verstärkungsstoffen, wie insbesondere Kohlenstofffasern, Glasfasern, Polymerfasern (insbesondere Aramidfasern);
- Festschmierstoffen, wie insbesondere ZnS, Graphit, Ruß, oder hexagonales BN;
- Kunststoffpartikel, wie insbesondere Aramid (PPTA)-, PPSO2-, PI- und PAI-Partikel, Polyacrylatpartikel (PAR), PBA-Partikel, PBI-Partikel;
- Metalloxiden, wie insbesondere Fe₂O₃, Al₂O₃, SiO₂, CrO₂, TiO₂, CuO, MgO, ZnO;
- Hartstoffpartikeln, insbesondere keramische Partikel, wie SiC, Si3N4, BC, cubisches BN;
- Fluoriden, wie insbesondere CaF₂, NaF, AlF₃;
- Schichtsilikaten, wie insbesondere Kaolin, Glimmer, Wollastonit, Talk, Kieselsäure;
- metallischen Feinpulvern, wie insbesondere Bronze und Wismut; und
- Pigmenten oder Mischphasenoxidpigmenten, wie insbesondere Co-Al, Cr-Sb-Ti, Co-Ti, Fe-Al oder Co-Cr.

In diesem Zusammenhang kann es sich als vorteilhaft erweisen, wenn der Anteil des weiteren Funktionsstoffs, bzw. der Anteil der mehreren weiteren Funktionsstoffe in Summe, maximal 5 Gew.-% des Gleitmaterials beträgt.

Vorzugweise beträgt ein Anteil der Füllstoffe am Gleitmaterial gemäß der zweiten Realisierungsform insgesamt (also in Summe) maximal 25,0 Gew.-%, insbesondere maximal 20,0 Gew.-%, weiter insbesondere maximal 15,0 Gew.-%, weiter insbesondere maximal 10,0 Gew.-%, weiter insbesondere maximal 7,0 Gew.-% des Gleitmaterials. Insbesondere beträgt ein Anteil der Füllstoffe 1,0 - 25,0 Gew.-%, insbesondere 1,0 - 20,0 Gew.-%, weiter insbesondere 5,0 - 15,0 Gew.-%, weiter insbesondere 3,0 - 7,0 Gew.-%, weiter insbesondere 5,0 Gew.-%, 7,0 Gew.-% oder 10,0 Gew.-% des Gleitmaterials. Insofern kann der Anteil der Polymerbasis insbesondere 75,0 - 99,0 Gew.-%, weiter insbesondere 80,0 - 99,0 Gew.-%, weiter insbesondere 85,0 - 95,0 Gew.-%, weiter insbesondere 93,0 - 97,0 Gew.-%, weiter insbesondere 90,0 Gew.-%, 93,0 Gew.-% oder 95,0 Gew.-%, des Gleitmaterials betragen.

Gemäß einem zweiten Aspekt wird ein Gleitlagerverbundwerkstoff vorgeschlagen, umfassend eine Stützschicht, eine Gleitschicht umfassend ein, insbesondere aus einem, Gleitmaterial auf Polymerbasis, und eine zwischen Gleitschicht und Stützschicht angeordnete Fügeschicht, insbesondere Klebeschicht, umfassend einen Epoxidharz-Klebstoff, wobei der Epoxidharz-Klebstoff eine Bruchdehnung von über 10% und ein Elastizitätsmodul weniger als 2000 MPa aufweist.

Die Fügeschicht ist insbesondere unmittelbar auf die Stützschicht aufgebracht. Die Gleitschicht ist insbesondere auf die Fügeschicht aufgebracht. Die Fügeschicht kann aus dem Epoxidharz-Klebstoff bestehen. Die Fügeschicht kann außer dem Epoxidharz-Klebstoff weitere Komponenten umfassen. Beispielsweise kann die Fügeschicht eine insbesondere metallische, Verstärkungsstruktur, vorzugsweise in Form eines Metallgitters, weiter vorzugsweise in Form eines Streckgitters oder eines Gewebes, umfassen. Der Epoxidharz-Klebstoff kann in die Verstärkungsstruktur einimprägniert sein.

Die vorstehend in Bezug auf den Gleitlagerverbundwerkstoff gemäß dem ersten Aspekt beschriebenen Vorteile und optionalen Merkmale können auch zur Ausgestaltung des Gleitlagerverbundwerkstoffs gemäß dem zweiten Aspekt dienen, sodass zur Vermeidung von Wiederholungen auf vorstehende Offenbarung hierzu verwiesen wird.

Die vorstehend beschriebenen Gleitlagerverbundwerkstoffe können insbesondere als Gleitlagerelement eingesetzt werden. Gemäß einem dritten Aspekt wird insofern auch ein Gleitlagerelement vorgeschlagen, welches aus einem Gleitlagerverbundwerkstoff der vorstehend beschriebenen Arten hergestellt ist. Bei dem Gleitlagerelement kann es sich beispielsweise um eine Gleitleiste, einen Gleitschuh, ein Gleitkissen, eine Gleitlagerschale, eine Gleitlagerbuchse oder -bundbuchse handeln. Mögliche Anwendungsgebiete umfassen unter anderem Sitzhöhenversteller für einen Sitz, (Tür)Scharniere, Front- und Heckklappenscharniere, Riemenspanner, Anlaufscheiben, Proportionalventile, Pedaleinrichtungen, Lenksysteme, Hochspannungsschutz ("HVC"), sowie Fahrräder, insbesondere Federgabeln und Dämpfer. Insofern wird auch ein Scharnier, insbesondere Türscharnier oder Front- oder Heckklappenscharnier, umfassend einen vorstehend beschriebenen Gleitlagerverbundwerkstoff, insbesondere umfassend ein Gleitlagerelement umfassend einen vorstehend beschriebenen Gleitlagerverbundwerkstoff, vorgeschlagen. Weiter wird und ein Sitzhöhenversteller für einen Sitz, ein Riemenspanner, eine Anlaufscheibe, ein Proportionalventil, eine Pedaleinrichtung, ein Lenksystem, ein Hochspannungsschutz ("HVC"), eine Federgabeln für ein Fahrrad sowie ein Dämpfer für ein Fahrrad, jeweils umfassend einen vorstehend beschriebenen Gleitlagerverbundwerkstoff vorgeschlagen.

Gemäß einem vierten Aspekt wird eine Verwendung eines Epoxidharz-Klebstoffs mit einer Bruchdehnung von mehr als 10% und weniger als 60%, insbesondere von mehr als 15% und weniger als 50%, und mit einem Elastizitätsmodul von weniger als 2000 MPa und mehr als 200 MPa, vorzugsweise von weniger als 1000 MPa und mehr als 500 MPa, zum Verbinden einer Gleitschicht, insbesondere umfassend ein Gleitmaterial auf Polymer-Basis, mit einer, insbesondere metallischen, Stützschicht vorgeschlagen.

Die vorstehend in Bezug auf den Gleitlagerverbundwerkstoff beschriebenen Vorteile und optionalen Merkmale können auch zur Ausgestaltung der Verwendung dienen, sodass zur Vermeidung von Wiederholungen auf vorstehende Offenbarung hierzu verwiesen wird.

Gemäß einem fünften Aspekt wird ein Verfahren zum Herstellen eines Gleitlagerverbundwerkstoffs, insbesondere eines vorstehend beschriebenen Gleitlagerverbundwerkstoffs, vorgeschlagen. Das Verfahren umfasst vorzugsweise die folgenden Schritte:
- Bereitstellen der Stützschicht;
- Bereitstellen einer Gleitmaterial-Folie aus einem Gleitmaterial auf Polymerbasis
- Bereitstellen eines aushärtbaren, insbesondere wärmeaushärtbaren, Epoxidharz-Klebstoffes;
- Aufbringen des Epoxidharz-Klebstoffs auf die Stützschicht und/oder die Gleitmaterial-Folie;
- Fügen der Stützschicht und der Gleitmaterial-Folie
- Aushärten des Epoxidharz-Klebstoffs.

Der Epoxidharz-Klebstoff ist insbesondere derart aushärtbar, vorzugswiese wärmeaushärtbar, ausgebildet, dass er nach dem Aushärten eine Bruchdehnung von über 10% und weniger als 60%, insbesondere über 15% und weniger als 50%, und ein Elastizitätsmodul von weniger als 2000 MPa und mehr als 200 MPa, insbesondere von weniger als 1000 MPa und mehr als 500 MPa, aufweist.

Das Aushärten des Epoxidharz-Klebstoffs kann insbesondere das Verpressen der Stützschicht, des Epoxidharz-Klebstoffs und der Gleitmaterial-Folie unter Aushärtung des Epoxidharz-Klebstoffs umfassen. Das Verpressen kann beispielsweise mittels eines Heißpressprozesses und/oder eines Walzvorgangs erfolgen.

Die vorstehend in Bezug auf den Gleitlagerverbundwerkstoff beschriebenen Vorteile und optionalen Merkmale können auch zur Ausgestaltung des Verfahrens gemäß dem fünften Aspekt dienen, sodass zur Vermeidung von Wiederholungen auf vorstehende Offenbarung hierzu verwiesen wird.

Gemäß einem sechsten Aspekt wir ein Verfahren zum Herstellen eines Gleitlagerelements, bspw. einer Gleitlagerbundbuchse, aus einem vorstehend beschriebenen Gleitlagerverbundwerkstoff vorgeschlagen. Das Verfahren umfasst insbesondere das Herstellen eines Gleitlagerverbundwerkstoffs gemäß dem fünften Aspekt und das anschließende Umformen des Gleitlagerverbundwerkstoffs, insbesondere unter Bildung des Gleitlagerelements (bspw. der Gleitlagerbundbuchse).

Gemäß einer Weiterbildung des Verfahrens gemäß dem sechsten Aspekt kann der Epoxidharz-Klebstoff vor dem Umformen nur teilweise ausgehärtet werden, dann umgeformt werden und erst nach dem Umformen der Epoxidharz-Klebstoff vollständig ausgehärtet werden. Auf diese Weise können Spannungsrisse beim Umformen weiter reduziert werden.

Die vorstehend in Bezug auf den Gleitlagerverbundwerkstoff beschriebenen Vorteile und optionalen Merkmale können auch zur Ausgestaltung des Verfahrens gemäß dem sechsten Aspekt dienen, sodass zur Vermeidung von Wiederholungen auf vorstehende Offenbarung hierzu verwiesen wird.

Die Erfindung wird im Folgenden anhand von Beispielen und anhand der Figuren näher erläutert. In der Zeichnung zeigen:
- Figur 1:: eine schematische Schnittansicht einer beispielhaften Ausgestaltung eines Gleitlagerverbundwerkstoffs;
- Figur 2:: eine schematische Darstellung zur Erläuterung der Bestimmung eines Schälwiderstands; und
- Figuren 3 und 4:: Diagramme zur Erläuterung eines Schälwiderstands verschiedener Proben aus einem Gleitlagerverbundwerkstoff.

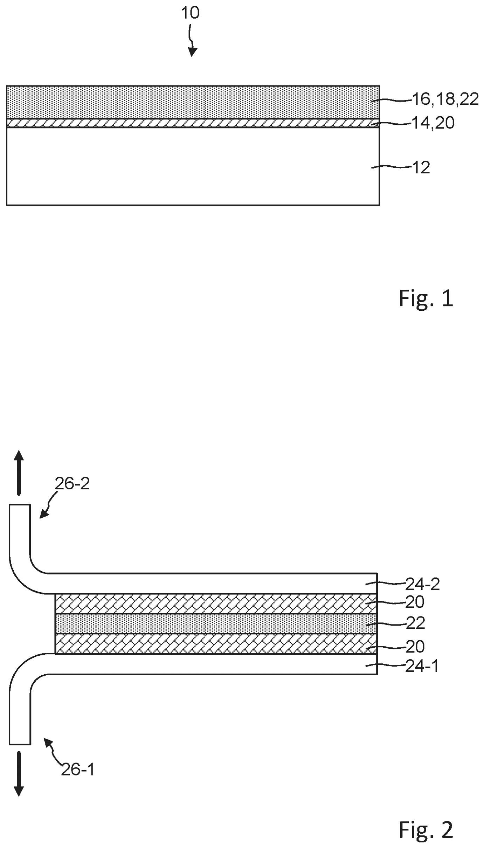

Die Figur 1 zeigt eine schematische Schnittansicht einer Ausgestaltung eines Gleitlagerverbundwerkstoffs, welcher insgesamt mit dem Bezugszeichen 10 bezeichnet ist.

Der Gleitlagerverbundwerkstoff 10 umfasst eine metallische Stützschicht 12 (auch als Substrat oder Träger bezeichnet), eine auf die Stützschicht 12 aufgebrachte Klebeschicht 14 und eine auf die Klebeschicht 14 aufgebrachte und über die Klebeschicht 14 mit der Stützschicht 12 verbundene Gleitschicht 16 aus einem Gleitmaterial 18.

Wie vorstehend erwähnt, ist das Gleitmaterial 18 auf Polymerbasis ausgebildet, besteht also hauptsächlich aus einem Polymer oder einer Polymermischung. Wie vorstehend erwähnt, ist die Polymerbasis vorzugsweise eine Polyamid-Basis oder eine UHMW-PE-Basis.

Das Gleitmaterial 16 kann wenigstens einen Füllstoff (nicht gesondert dargestellt) aufweisen, der in der matrixbildenden Polymerbasis aufgenommen ist.

Die Klebeschicht umfasst einen ausgehärteten Epoxidharz-Klebstoff 20, welcher eine Bruchdehnung von über 10% und ein E-Modul von weniger als 2000 MPa aufweist.

Die Gleitschicht 16 kann insbesondere als Folie 22 aus dem Gleitmaterial 18 bereitgestellt sein. Zur Herstellung eines vorstehend beschriebenen Gleitlagerverbundwerkstoffs 10 kann insbesondere zunächst der unausgehärtete Epoxidharz-Klebstoff 20 auf die Stützschicht 12 und/oder die Gleitmaterial-Folie 22 aufgetragen werden und sodann die Stützschicht 12 und die Gleitmaterial-Folie 22 - unter Aushärtung des Epoxidharz-Klebstoffs 20 - miteinander verpresst und somit verbunden werden, bspw. in einer Heißpresse.

Die Haftfestigkeit zwischen Stützschicht und Gleitschicht wurde mittels eines T-Peel-Tests anhand von Sandwichlaminaten ermittelt. Zu diesem Zweck wurden Proben mit einem Fünfschichtaufbau hergestellt, wobei die zentrale Schicht durch die Gleitmaterial-Folie 22 gebildet ist, die beidseits mit einem (der Stützschicht 12 entsprechenden) Substrat 24 mittels Epoxidharz-Klebstoff 20 verklebt wurde (vgl. Fig. 2).

### Herstellung der Proben:

Im Konkreten wurden zwei metallische Substrate 24-1, 24-2 mit Abmessung 100 mm x 120 mm mit Epoxidharz-Klebstoff 20 bestrichen, wobei bei jedem Substrat 24-1, 24-2 ein 20 mm breiter Endabschnitt 26-1, 26-2 freigelassen wurde, sodass eine 100 mm x 100 mm große Klebefläche entsteht. Auf die Klebefläche des ersten Substrats 24-1 wurde ein Zuschnitt der Gleitmaterial-Folie 22 mit Abmessung 100 mm x 100 mm aufgelegt. Auf die Gleitmaterial-Folie 22 wurde dann das zweite mit Epoxidharz-Klebstoff 20 bestrichene Substrat 24-2 derart (mit der Klebstoff-Seite) auf die Gleitmaterial-Folie 22 aufgelegt, dass sich die (Klebstoff-freien) Endabschnitte 26-1, 26-2 der beiden Substrate 24-1, 24-2 überlappen (vgl. Fig. 2).

Dieser Fünfschichtaufbau wurde sodann in einer Heißpresse bei 190 °C für 450 s verpresst. Im Anschluss wurden aus dem Verbund 3 Proben mit einer Breite von jeweils 25 mm herausgeschnitten. Die Proben wurden sodann einem nachfolgend beschriebenen T-Peel-Test angelehnt an DIN EN ISO 11339 zur Ermittlung des Elastizitätsmoduls und der Bruchdehnung unterzogen.

### Durchführung des T-Peel-Tests:

Die nicht verklebten Endabschnitte 26-1, 26-2 der Proben wurden um 90 ° nach außen gebogen (siehe Fig. 2), in eine Zugprüfmaschine eingespannt und mit einer Ziehgeschwindigkeit von 300 mm/min auseinandergezogen. Die hierzu erforderliche Kraft wurde gemessen, für jede Probe über einen Wegbereich von 50 mm - 150 mm gemittelt und über jeweils 3 Proben ein Durchschnitt gebildet. Der Schälwiderstand wurde sodann als Quotient aus der so gemittelten Kraft und der Klebebreite von 25 mm berechnet.

Im Konkreten wurden folgende Proben untersucht

| Probe | Substrat | Klebstoff | Gleitfolie |
|---|---|---|---|
| A (Vergleich) | Stahl, geschliffen, 0,3 mm | Klebstoff 1 | 80 Gew.-% PA6 + 20 Gew-% UHMW-PE als Füllstoff |
| B (Vergleich) | Stahl, geschliffen, 0,3 mm | Klebstoff 2 | 80 Gew.-% PA6 + 20 Gew-% UHMW-PE als Füllstoff |
| C | Stahl, geschliffen, 0,3 mm | Klebstoff 3 | 80 Gew.-% PA6 + 20 Gew-% UHMW-PE als Füllstoff |
| D (Vergleich) | Stahl, geschliffen, 0,3 mm | Klebstoff 1 | 95 Gew.- % UHMW-PE + 5 Gew.-% Mischung aus Calciumphosphat / SnS2 / WS2 |
| E (Vergleich) | Stahl, geschliffen, 0,3 mm | Klebstoff 2 | 95 Gew.- % UHMW-PE + 5 Gew.-% Mischung aus Calciumphosphat / SnS2 / WS2 |
| F | Stahl, geschliffen, 0,3 mm | Klebstoff 3 | 95 Gew.- % UHMW-PE + 5 Gew.-% Mischung aus Calciumphosphat / SnS2 / WS2 |

In den genannten Beispielen weist die Mischung aus Calciumphosphat, SnS₂ und WS₂ beispielhaft und bevorzugt folgende Zusammensetzung auf: 88 Gew.-% Calciumphosphat / 8,5 Gew.-% SnS₂ / 3,5% Gew-% WS₂.

Als Klebstoffe wurden Epoxidharz-Klebstoffe auf Basis von DGEBA (Diglycidylether von Bisphenol-A) mit folgenden mechanischen Eigenschaften verwendet

| Klebstoff | Bruchdehnung (%) | E-Modul (MPa) |
|---|---|---|
| Klebstoff 1 (Vergleich) | 2 | 3300 |
| Klebstoff 2 (Vergleich) | 5 | 2000 |
| Klebstoff 3 | 20 | 850 |

Konkret wurde als Klebstoff 3 der Klebstoff SikaPower^{®}-533 MBX der Sika AG, Zugerstrasse 50, CH-6340 Baar, Schweiz verwendet.

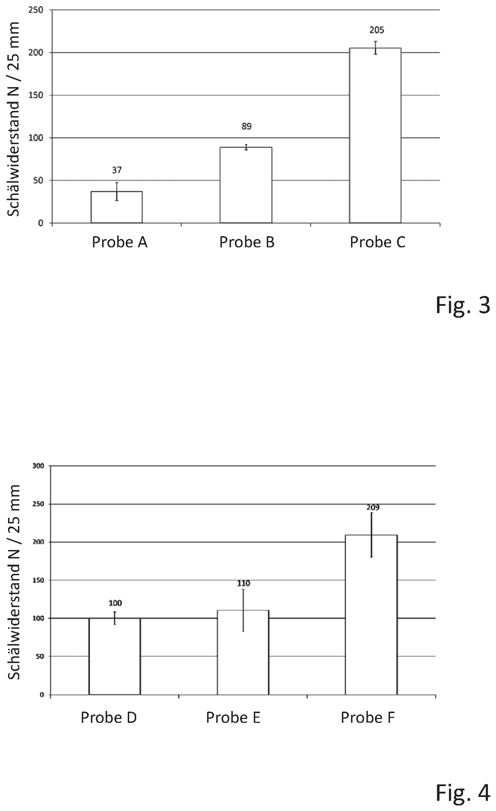

Wie die in den Figuren 3 (für Proben A-C) und 4 (für Proben D-F) dargestellten Ergebnisse zeigen, konnten bei den erfindungsgemäßen Gleitlagerverbundwerkstoffen deutliche höhere Schälwiderstände erzielt werden als bei den Vergleichsproben.

## Patentansprüche

1. Gleitlagerverbundwerkstoff (10) umfassend:
- eine, insbesondere metallische, Stützschicht (12), insbesondere aus Stahl oder einer Kupferlegierung, und
- eine Gleitschicht (16) umfassend ein, insbesondere PFAS-freies, Gleitmaterial (18) auf Polymerbasis,
wobei die Gleitschicht (16) mittels eines, insbesondere unmittelbar auf die Stützschicht (12) aufgebrachten, Epoxidharz-Klebstoffs (20) mit der Stützschicht (12) gefügt ist, wobei der Epoxidharz-Klebstoff (20) eine Bruchdehnung von mehr als 10% und weniger als 60% und ein Elastizitätsmodul von weniger als 2000 MPa und mehr als 200 MPa aufweist.

2. Gleitlagerverbundwerkstoff (10) nach Anspruch 1, wobei der Epoxidharz-Klebstoff (20) eine Bruchdehnung von mehr als 15% und weniger als 50% aufweist.

3. Gleitlagerverbundwerkstoff (10) nach Anspruch 1 oder 2, wobei der der Epoxidharz-Klebstoff (20) ein Elastizitätsmodul von weniger als 1500 MPa, insbesondere weniger als 1000 MPa, und vorzugweise mehr als 400 MPa, weiter vorzugsweise mehr als 500 MPa, aufweist.

4. Gleitlagerverbundwerkstoff (10) nach einem der vorherigen Ansprüche, wobei der Epoxidharz-Klebstoff (20) ein Epoxidharz umfasst, wobei ein Anteil des Epoxidharzes an dem Epoxidharz-Klebstoff (20) 15-50 Gew.-% beträgt.

5. Gleitlagerverbundwerkstoff (10) nach einem der vorherigen Ansprüche, wobei der Epoxidharz-Klebstoff (20) ein 1-Komponenten-Klebstoff (20) ist.

6. Gleitlagerverbundwerkstoff (10) nach einem der vorherigen Ansprüche, wobei die Gleitschicht (16) als Folie (22) aus dem Gleitmaterial (18) ausgebildet ist, welche mittels des Epoxidharz-Klebstoffs (20) mit der Stützschicht (12) verbunden ist.

7. Gleitlagerverbundwerkstoff (10) nach einem der vorherigen Ansprüche, wobei das Gleitmaterial (18) Füllstoffe zur Verbesserung der tribologischen Eigenschaften aufweist.

8. Gleitlagerverbundwerkstoff (10) nach einem der vorherigen Ansprüche, wobei das Gleitmaterial (18) einen thermoplastischen Kunststoff umfasst oder daraus besteht, insbesondere wobei der Kunststoff ausgewählt ist aus der Gruppe bestehend aus Polyamid, Polyethylen, PEEK, PPA, PPS, POM und Mischungen daraus.

9. Gleitlagerverbundwerkstoff (10) nach einem der Ansprüche 1 bis 7, wobei die Polymerbasis eine Polyamid-Basis ist, insbesondere wobei die Polyamid-Basis aus Polyamid besteht oder Polyamid umfasst, wobei das Polyamid ausgewählt ist aus der Gruppe bestehend aus: PA46, PA6, PA66, PA610, PA612, PA12 und Kombinationen hiervon.

10. Gleitlagerverbundwerkstoff (10) nach dem vorherigen Anspruch, wobei das Gleitmaterial (18) Polyethylen mit einer Molmasse von wenigstens 0,5 Millionen g/mol, insbesondere von wenigstens 5 Millionen g/mol, als Füllstoff aufweist, wobei der Anteil des Polyethylens am Gleitmaterial (18) 2 bis 25 Gew.-%, insbesondere 15 bis 25 Gew.-%, weiter insbesondere 18 bis 22 Gew.-%, beträgt.

11. Gleitlagerverbundwerkstoff (10) nach Anspruch 9, wobei das Gleitmaterial (18) umfasst:
- 15 bis 25 Gew.-%, insbesondere 18 bis 22 Gew.-%, vorzugsweise 20 Gew.-%, Polyethylen mit einer Molmasse von wenigstens 0,5 Millionen g/mol, insbesondere von wenigstens 5 Millionen g/mol, als Füllstoff;
- gegebenenfalls bis zu 5,0 Gew.-% Pigmente; und
- Rest Polyamid-Basis, insbesondere Polyamid, vorzugsweise aufweisend PA6.

12. Gleitlagerverbundwerkstoff (10) nach einem der Ansprüche 1 bis 6, wobei das Gleitmaterial (18) umfasst:
- 13 bis 17 Gew.-%, insbesondere 14 bis 16 Gew.-%, weiter insbesondere 14,5 bis 15,5 Gew.-% Polyethylen mit einer Molmasse von wenigstens 0,5 Millionen g/mol, insbesondere von wenigstens 1,5 Millionen g/mol, weiter insbesondere von wenigstens 2,0 Millionen g/mol, weiter insbesondere von wenigstens 5,0 Millionen g/mol, als Füllstoff;
- 5 bis 7 Gew.-%, insbesondere 5,5 bis 6,5 Gew.-%, weiter insbesondere 6,25 Gew.-%, BaSO₄ als Füllstoff,
- 5 bis 7 Gew.-%, insbesondere 5,5 bis 6,5 Gew.-%, weiter insbesondere 6,25 Gew.-%, Mischung aus Calciumphosphat und wenigstens einem Metallsulfid, insbesondere SnS₂ und/oder WS₂, als Füllstoff;
- gegebenenfalls bis zu 5 Gew.-% Pigmente;
- Rest Polyamid-Basis, insbesondere wobei die Polyamid-Basis ein Gemisch aus PA6 und PA66 aufweist oder daraus besteht, weiter insbesondere wobei in der Polyamid-Basis das Massenverhältnis von PA6:PA66 zwischen 4:1 und 5:1 beträgt.

13. Gleitlagerverbundwerkstoff (10) nach einem der Ansprüche 1 bis 7, wobei die Polymerbasis eine UHMW-PE-Basis umfassend ultrahochmolekulares Polyethylen mit einer Molmasse von wenigstens 5,0 Millionen g/mol, insbesondere von wenigstens 5 Millionen g/mol, ist.

14. Gleitlagerverbundwerkstoff (10) nach dem vorherigen Anspruch, wobei das Gleitmaterial (18) außerdem eine Mischung aus Calciumphosphat, WS₂ und SnS₂ als Füllstoff umfasst, wobei der Anteil dieser Mischung am Gleitmaterial (18) maximal 15,0 Gew.-%, vorzugsweise maximal 10,0 Gew.-%, weiter vorzugsweise maximal 7,0 Gew.-%, weiter vorzugsweise maximal 5,0 Gew.-%, weiter vorzugweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.-%, weiter vorzugsweise 4,0 - 6,0 Gew.-%, beträgt.

15. Gleitlagerelement, hergestellt aus einem Gleitlagerverbundwerkstoff (10) nach einem der vorherigen Ansprüche.

16. Verwendung eines Epoxidharz-Klebstoffs (20) mit einer Bruchdehnung von mehr als 10% und weniger als 60% und einem Elastizitätsmodul von weniger als 2000 MPa und mehr als 200 MPa zum Fügen einer Gleitschicht (16) umfassend ein Gleitmaterial (18) auf Polymerbasis mit einer, insbesondere metallischen, Stützschicht (12).

## Claims

1. Slide bearing composite material (10) comprising:
- an, in particular metal, support layer (12), in particular made of steel or a copper alloy, and
- a sliding layer (16) comprising a polymer-based, in particular PFAS-free, sliding material (18),
wherein the sliding layer (16) is joined to the support layer (12) by means of an epoxy resin adhesive (20) which is applied in particular directly to the support layer (12), wherein the epoxy resin adhesive (20) has an elongation of more than 10% and less than 60% and a modulus of elasticity of less than 2000 MPa and more than 200 MPa.

2. Slide bearing composite material (10) according to claim 1, wherein the epoxy resin adhesive (20) has an elongation of more than 15% and less than 50%.

3. Slide bearing composite material (10) according to claim 1 or 2, wherein the the epoxy resin adhesive (20) has a modulus of elasticity of less than 1500 MPa, in particular less than 1000 MPa, and preferably more than 400 MPa, further preferably more than 500 MPa.

4. Slide bearing composite material (10) according to any of the preceding claims, wherein the epoxy resin adhesive (20) comprises an epoxy resin, wherein a proportion of the epoxy resin in the epoxy resin adhesive (20) is 15-50 wt.%.

5. Slide bearing composite material (10) according to any of the preceding claims, wherein the epoxy resin adhesive (20) is a 1-component adhesive (20).

6. Slide bearing composite material (10) according to any of the preceding claims, wherein the sliding layer (16) is formed from the sliding material (18) as a film (22) which is bonded to the support layer (12) by means of the epoxy resin adhesive (20).

7. Slide bearing composite material (10) according to any of the preceding claims, wherein the sliding material (18) comprises fillers to improve the tribological properties.

8. Slide bearing composite material (10) according to any of the preceding claims, wherein the sliding material (18) comprises or consists of a thermoplastics material, in particular wherein the plastics materials are selected from the group consisting of polyamide, polyethylene, PEEK, PPA, PPS, POM and mixtures thereof.

9. Slide bearing composite material (10) according to any of claims 1 to 7, wherein the polymer base is a polyamide base, in particular wherein the polyamide base consists of polyamide or comprises polyamide, wherein the polyamide is selected from the group consisting of: PA46, PA6, PA66, PA610, PA612, PA12 and combinations thereof.

10. Slide bearing composite material (10) according to the preceding claim, wherein the sliding material (18) comprises polyethylene having a molar mass of at least 0.5 million g/mol, in particular of at least 5 million g/mol, as a filler, wherein the proportion of polyethylene in the sliding material (18) is 2 to 25 wt.%, in particular 15 to 25 wt.%, further in particular 18 to 22 wt.%.

11. Slide bearing composite material (10) according to claim 9, wherein the sliding material (18) comprises:
- 15 to 25 wt.%, in particular 18 to 22 wt.%, preferably 20 wt.%, polyethylene having a molar mass of at least 0.5 million g/mol, in particular of at least 5 million g/mol, as a filler;
- optionally up to 5.0 wt.% pigments; and
- remainder polyamide base, in particular polyamide, preferably comprising PA6.

12. Slide bearing composite material (10) according to any of claims 1 to 6, wherein the sliding material (18) comprises:
- 13 to 17 wt.%, in particular 14 to 16 wt.%, further in particular 14.5 to 15.5 wt.%, polyethylene having a molar mass of at least 0.5 million g/mol, in particular of at least 1.5 million g/mol, further in particular of at least 2.0 million g/mol, further in particular of at least 5.0 million g/mol, as a filler;
- 5 to 7 wt.%, in particular 5.5 to 6.5 wt.%, further in particular 6.25 wt.%, BaSO₄ as a filler,
- 5 to 7 wt.%, in particular 5.5 to 6.5 wt.%, further in particular 6.25 wt.%, mixture of calcium phosphate and at least one metal sulfide, in particular SnS₂ and/or WS₂, as a filler;
- optionally up to 5 wt.% pigments;
- remainder polyamide base, in particular wherein the polyamide base comprises or consists of a mixture of PA6 and PA66, further in particular wherein the mass ratio of PA6:PA66 in the polyamide base is between 4:1 and 5:1.

13. Slide bearing composite material (10) according to any of claims 1 to 7, wherein the polymer base is a UHMW-PE base comprising ultra-high-molecular-weight polyethylene having a molar mass of at least 5.0 million g/mol, in particular of at least 5 million g/mol.

14. Slide bearing composite material (10) according to the preceding claim, wherein the sliding material (18) furthermore comprises a mixture of calcium phosphate, WS₂ and SnS₂ as a filler, wherein the proportion of this mixture in the sliding material (18) is a maximum of 15.0 wt.%, preferably a maximum of 10.0 wt.%, further preferably a maximum of 7.0 wt.%, further preferably a maximum of 5.0 wt.%, further preferably 1.0 - 10.0 wt.%, further preferably 1.0 - 7.0 wt.%, further preferably 1.0 - 5.0 wt.%, further preferably 3.0 - 7.0 wt.%, further preferably 4.0 - 6.0 wt.%.

15. Slide bearing element, produced from a slide bearing composite material (10) according to any of the preceding claims.

16. Use of an epoxy resin adhesive (20) having an elongation of more than 10% and less than 60% and a modulus of elasticity of less than 2000 MPa and more than 200 MPa to join a sliding layer (16) comprising a polymer-based sliding material (18) to an, in particular metal, support layer (12).

## Revendications

1. Matériau composite pour palier lisse (10) comprenant:
- une couche de support (12), en particulier métallique, en particulier en acier ou en un alliage de cuivre, et
- une couche de glissement (16) comprenant un matériau de glissement (18) à base de polymère, en particulier exempt de PFAS,
dans lequel la couche de glissement (16) est assemblée à la couche de support (12) au moyen d'un adhésif à base de résine époxy (20), en particulier appliqué directement sur la couche de support (12), ledit adhésif à base de résine époxy (20) présentant un allongement à la rupture supérieur à 10% et inférieur à 60% et un module d'élasticité inférieur à 2000 MPa et supérieur à 200 MPa.

2. Matériau composite pour palier lisse (10) selon la revendication 1, dans lequel l'adhésif à base de résine époxy (20) présente un allongement à la rupture supérieur à 15% et inférieur à 50%.

3. Matériau composite pour palier lisse (10) selon la revendication 1 ou 2, dans lequel l'adhésif à base de résine époxy (20) présente un module d'élasticité inférieur à 1500 MPa, en particulier inférieur à 1000 MPa, et de préférence supérieur à 400 MPa, encore de préférence supérieur à 500 MPa.

4. Matériau composite pour palier lisse (10) selon l'une quelconque des revendications précédentes, dans lequel l'adhésif à base de résine époxy (20) comprend une résine époxy, une proportion de la résine époxy dans l'adhésif à base de résine époxy (20) étant comprise entre 15 et 50 % en poids.

5. Matériau composite pour palier lisse (10) selon l'une quelconque des revendications précédentes, dans lequel l'adhésif à base de résine époxy (20) est un adhésif monocomposant (20).

6. Matériau composite pour palier lisse (10) selon l'une quelconque des revendications précédentes, dans lequel la couche de glissement (16) est réalisée en tant que film (22) constitué du matériau de glissement (18), lequel est lié à la couche de support (12) au moyen de l'adhésif à base de résine époxy (20).

7. Matériau composite pour palier lisse (10) selon l'une quelconque des revendications précédentes, dans lequel le matériau de glissement (18) comprend des charges destinées à améliorer les propriétés tribologiques.

8. Matériau composite pour palier lisse (10) selon l'une quelconque des revendications précédentes, dans lequel le matériau de glissement (18) comprend ou est constitué d'une matière plastique thermoplastique, en particulier dans lequel la matière plastique est choisie dans le groupe constitué par le polyamide, le polyéthylène, le PEEK, le PPA, le PPS, le POM et leurs mélanges.

9. Matériau composite pour palier lisse (10) selon l'une quelconque des revendications 1 à 7, dans lequel la base de polymère est une base de polyamide, en particulier dans lequel la base de polyamide est constituée de polyamide ou comprend du polyamide, dans lequel le polyamide est choisi dans le groupe constitué par: PA46, PA6, PA66, PA610, PA612, PA12 et leurs combinaisons.

10. Matériau composite pour palier lisse (10) selon la revendication précédente, dans lequel le matériau de glissement (18) comprend, en tant que charge, du polyéthylène d'une masse molaire d'au moins 0,5 million de g/mol, en particulier d'au moins 5 millions de g/mol, dans lequel la proportion du polyéthylène dans le matériau de glissement (18) est comprise entre 2 et 25 % en poids, en particulier entre 15 et 25 % en poids, encore en particulier entre 18 et 22 % en poids.

11. Matériau composite pour palier lisse (10) selon la revendication 9, dans lequel le matériau de glissement (18) comprend:
- 15 à 25 % en poids, en particulier 18 à 22 % en poids, de préférence 20 % en poids, de polyéthylène ayant une masse molaire d'au moins 0,5 million de g/mol, en particulier d'au moins 5 millions de g/mol, en tant que charge;
- le cas échéant jusqu'à 5,0 % en poids de pigments; et
- le reste est de la base de polyamide, en particulier du polyamide, de préférence présentant du PA6.

12. Matériau composite pour palier lisse (10) selon l'une quelconque des revendications 1 à 6, dans lequel le matériau de glissement (18) comprend:
- 13 à 17 % en poids, en particulier 14 à 16 % en poids, encore en particulier 14,5 à 15,5 % en poids, de polyéthylène ayant une masse molaire d'au moins 0,5 million de g/mol, en particulier d'au moins 1,5 million de g/mol, encore en particulier d'au moins 2,0 millions de g/mol, encore en particulier d'au moins 5,0 millions de g/mol, en tant que charge;
- 5 à 7 % en poids, en particulier 5,5 à 6,5 % en poids, encore en particulier 6,25 % en poids, de BaSO₄ en tant que charge;
- 5 à 7 % en poids, en particulier 5,5 à 6,5 % en poids, encore en particulier 6,25 % en poids, d'un mélange de phosphate de calcium et d'au moins un sulfure métallique, en particulier SnS₂ et/ou WS₂, en tant que charge;
- le cas échéant jusqu'à 5 % en poids de pigments;
- le reste est de la base de polyamide, en particulier dans lequel la base de polyamide présente ou est constituée d'un mélange de PA6 et de PA66, dans lequel encore en particulier le rapport de masse de PA6 à PA66 dans la base de polyamide est compris entre 4:1 et 5:1.

13. Matériau composite pour palier lisse (10) selon l'une quelconque des revendications 1 à 7, dans lequel la base de polymère est une base UHMW-PE comprenant du polyéthylène de masse molaire très élevée ayant une masse molaire d'au moins 5,0 millions de g/mol, en particulier d'au moins 5 millions de g/mol.

14. Matériau composite pour palier lisse (10) selon la revendication précédente, dans lequel le matériau de glissement (18) comprend en outre un mélange de phosphate de calcium, de WS₂ et SnS₂ en tant que charge, dans lequel la proportion de ce mélange dans le matériau de glissement (18) est au maximum de 15,0 % en poids, de préférence au maximum de 10,0 % en poids, encore de préférence au maximum de 7,0 % en poids, encore de préférence au maximum de 5,0 % en poids, encore de préférence de 1,0 à 10,0 % en poids, encore de préférence de 1,0 à 7,0 % en poids, encore de préférence de 1,0 à 5,0 % en poids, encore de préférence de 3,0 à 7,0 % en poids, encore de préférence de 4,0 à 6,0 % en poids.

15. Élément de palier lisse fabriqué à partir d'un matériau composite pour palier lisse (10) selon l'une quelconque des revendications précédentes.

16. Utilisation d'un adhésif à base de résine époxy (20) ayant un allongement à la rupture supérieur à 10 % et inférieur à 60 % et un module d'élasticité inférieur à 2000 MPa et supérieur à 200 MPa, pour assembler une couche de glissement (16) comprenant un matériau de glissement (18) à base de polymère, et une couche de support (12), en particulier métallique.
